# EUROPÄISCHE PATENTANMELDUNG

(11) **EP 3 473 909 A1**
(43) Veröffentlichungstag der Anmeldung: **24.04.2019**
(21) Anmeldenummer: 18200892.0
(22) Anmeldetag: 17.10.2018
(51) Int. Cl.: F16L 3/223, F16L 3/237

(54) **SCHELLENEINHEIT FÜR HYDRAULIKLEITUNGEN**

(30) Priorität: 18.10.2017 DE 102017124233
(71) Anmelder: Hansa-Flex AG, 28307 Bremen (DE)
(72) Erfinder: Spille, Burkhard, 27755 Delmenhorst (DE); Broermann, Mike, 49401 Damme (DE)
(74) Vertreter: Eisenführ Speiser

(57) **Zusammenfassung**

Es wird eine Schelleneinheit für Hydraulikleitungen (10) vorgesehen, welche einen Grundkörper (10) und eine Deckplatte (13) aufweist. Der Grundkörper ist an einer Wand oder einer Decke befestigbar und weist mindestens eine Grundkörper-Ausnehmung (13) zur Aufnahme einer Hydraulikleitung auf. Die Deckplatte (20) weist mindestens eine Deckplatten-Ausnehmung (22) auf, welche mit der mindestens einen Grundkörper-Ausnehmung (13) zusammenwirken kann, um eine Hydraulikleitung aufzunehmen. Der Grundkörper (10) weist mindestens zwei Rasthaken (14) auf, mittels welchen die Deckplatte (20) an dem Grundkörper (10) lösbar befestigbar ist.

## Beschreibung

Die vorliegende Erfindung betrifft eine Schelleneinheit für Hydraulikleitungen.

Hydraulikleitungen beispielsweise in Form von Rohren oder Schlauchleitungen werden typischerweise mittels Schelleneinheiten am Einsatzort montiert. Eine entsprechende Montage ist oftmals sehr aufwendig sowie zeitaufwendig.

In der prioritätsbegründenden deutschen Patentanmeldung hat das Deutsche Patent- und Markenamt die folgenden Dokumente recherchiert: US 3 856 246 A, US 5 104 072 A, DE 28 20 406 A1 und DE 10 2008 008 334 A1.

Es ist daher eine Aufgabe der vorliegenden Erfindung, eine Schelleneinheit für Hydraulikleitungen vorzusehen, welche eine verbesserte Montage ermöglicht.

Diese Aufgabe wird durch eine Schelleneinheit nach Anspruch 1 gelöst.

Gemäß einem Aspekt der vorliegenden Erfindung weist die Schelleneinheit einen Grundkörper zum Befestigen an einer Wand, optional eine Zwischenplatte sowie eine Deckplatte auf. Der Grundkörper wird an einer Wand bzw. an dem Montageort befestigt, die Grundplatte weist mindestens eine Ausnehmung zur Aufnahme einer ersten Hydraulikleitung auf.

Die Grundplatte weist mindestens eine Ausnehmung zur außermittigen Aufnahme der Hydraulikleitung auf. Die mindestens eine erste Ausnehmung weist einen Schnitt von größer als 180° auf. Die Ausnehmung in der Zwischenplatte oder in der Deckplatte kann an die erste Ausnehmung in der Grundplatte angepasst sein, so dass sich im zusammengesteckten Zustand eine kreisförmige Ausnehmung ausbildet.

Die Zwischenplatte kann eine erste Ausnehmung zur Aufnahme der ersten Hydraulikleitung sowie eine Ausnehmung zur Aufnahme einer zweiten Hydraulikleitung aufweisen. Die Deckplatte weist ferner mindestens eine Ausnehmung zur Aufnahme einer ersten oder zweiten Hydraulikleitung auf.

Gemäß einem weiteren Aspekt der vorliegenden Erfindung kann die Zwischenplatte oder die Deckplatte auf die Grundplatte montiert werden. Dies erfolgt insbesondere mittels einer Rastfunktion.

Der Grundkörper wird beispielsweise mittels einer Schraube an einer Decke oder einer Wand montiert.

Gemäß einem Aspekt der vorliegenden Erfindung können Inlays in die Ausnehmungen platziert werden, so dass Hydraulikleitungen mit unterschiedlichem Außendurchmesser durch die Schelleneinheit montiert und gehalten werden können.

Gemäß einem Aspekt der vorliegenden Erfindung weisen die Inlays Füße auf, welche in Schlitze in den Ausnehmungen des Grundkörpers platziert werden können, um die Inlays sicher und einfach montieren zu können.

Gemäß einem Aspekt der vorliegenden Erfindung wird eine Schelleneinheit für Hydraulikleitungen vorgesehen. Die Schelleneinheit weist einen Grundkörper, welcher an einer Wand oder einer Decke befestigbar ist und mindestens eine Grundkörper-Ausnehmung zur Aufnahme einer Hydraulikleitung aufweist. Die Schelleneinheit weist eine Zwischenplatte auf, weiche an ihrer ersten Seite mindestens eine erste Zwischenplatten-Ausnehmung und an ihrer zweiten Seite mindestens eine zweite Zwischenplatten-Ausnehmung jeweils zur mindestens teilweisen Aufnahme einer Hydraulikleitung aufweist. Der Grundkörper weist mindestens zwei Rasthaken auf, mittels welchen die Zwischenplatte an dem Grundkörper lösbar befestigbar ist. Die Schelleneinheit weist eine Deckplatte auf, welche mindestens eine Deckplatten-Ausnehmung aufweist, welche mit den Zwischenplatten-Ausnehmungen zusammenwirken, um eine Hydraulikleitung aufzunehmen. Die Zwischenplatte weist zwei Rasthaken auf, mittels welcher die Deckplatte an der Zwischenplatte lösbar befestigbar ist.

Gemäß einem Aspekt der vorliegenden Erfindung ist eine Durchgangsschraube oder Aufbauschraube zum Verbinden der Zwischenplatte, der Deckplatte und/oder dem Grundkörper vorgesehen ist.

Gemäß einem weiteren Aspekt der vorliegenden Erfindung weist die Durchgangsschraube oder die Aufbauschraube eine Bohrung auf, mittels welcher die Schraube montiert oder demontiert werden kann.

Gemäß einem weiteren Aspekt der vorliegenden Erfindung weist der Grundkörper mindestens eine Ausnehmung zur Aufnahme von Kabelbindern auf.

Gemäß einem Aspekt der vorliegenden Erfindung sind die Abschnitte in dem Grundkörper außermittig vorgesehen. Mit anderen Worten, es ist ein Schnitt vorhanden, der größer als 180° ist. Damit können die Hydraulikleitungen in die Abschnitte positioniert werden, so dass sie durch die Außermittigkeit bzw. durch den Schnitt von größer als 180° dort gehalten werden und nicht herausfallen. Dies ist insbesondere vorteilhaft bei einer Überkopfmontage. Die Ausnehmungen in der Zwischenplatte oder in der Deckplatte sind dann entsprechend angepasst, so dass die Schelleneinheit im zusammenmontierten Zustand die Hydraulikleitungen komplett umgibt, d.h. zum einen Teil durch die Ausnehmungen in dem Grundkörper und zum anderen Teil durch die Ausnehmungen in der Zwischenplatte oder in der Deckplatte.

Der Grundkörper weist zwei Rasthaken auf, welche in Rasteinheiten in der Zwischenplatte oder in der Deckplatte einrasten können. Die Rasteinheiten lassen sich beispielsweise mittels eines Werkzeugs lösen, so dass die Zwischenplatte oder die Deckplatte demontiert werden kann.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Fig. 1: zeigt eine schematische Explosionsdarstellung einer Schelleneinheit gemäß einem ersten Ausführungsbeispiel der vorliegenden Erfindung,
- Fig. 2: zeigt eine perspektivische Ansicht einer Schelleneinheit gemäß dem ersten Ausführungsbeispiel der Erfindung,
- Fig. 3A bis 3D: zeigen jeweils verschiedene Ansichten einer Schelleneinheit gemäß dem ersten Ausführungsbeispiel, und
- Fig. 4A und 4B: zeigen jeweils eine perspektivische Ansicht einer Schelleneinheit gemaß einem zweiten Ausführungsbeispiel der Erfindung.

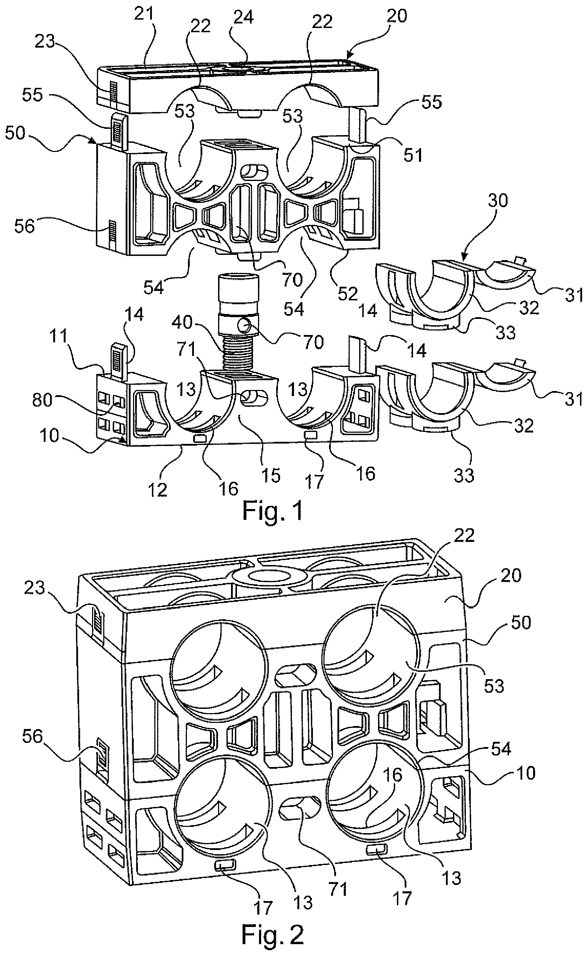

Fig. 1 zeigt eine schematische Explosionsdarstellung einer Schelleneinheit gemäß einem Aspekt der vorliegenden Erfindung. Die Schelleneinheit weist einen Grundkörper 10, optional eine Zwischenplatte 50 sowie eine Deckplatte 20 auf. Der Grundkörper 10 weist beispielsweise zwei Ausnehmungen 13 zur teilweisen Aufnahme von Hydraulikleitungen auf. Ferner weist der Grundkörper ein erstes Ende 11 sowie ein zweites Ende 12 auf. Der Grundkörper 10 wird mittels des zweiten Endes 12 an einer Wand oder einer Decke befestigt. An dem ersten Ende 11 sind die zwei Rasthaken 14 vorgesehen.

Optional können Schlitze 16 im Bereich der Ausnehmungen 13 vorgesehen sein.

Optional können Inlays 30 in die Ausnehmungen 13 platziert werden, um Hydraulikleitungen mit kleinerem Außendurchmesser aufzunehmen. Die Inlays 30 weisen einen ersten Abschnitt 32 auf, welcher an die Ausnehmung 13 angepasst ist. Ferner weisen die Inlays 30 einen schwenkbaren Abschnitt 31 auf. Des Weiteren können die Inlays Füße 33 aufweisen, welche in die Schlitze 16 platziert werden können, um die Inlays zu montieren und sicher zu halten.

Optional kann eine Öffnung 17 in dem Grundkörper 10 vorhanden sein, mittels weichem die Füße 33, welche in den Schlitzen 16 platziert sind, entriegelt werden können.

Die Zwischenplatte 50 weist an ihrer unteren Seite zwei Ausnehmungen 54 auf, welche mit den Ausnehmungen 13 des Grundkörpers zusammenwirken, wenn die Zwischenplatte 50 auf dem Grundkörper 10 platziert ist, so dass die sich in den Ausnehmungen 13 befindlichen Hydraulikleitungen komplett umgeben werden.

Optional kann die Zwischenplatte 50 Rasteinheiten 56 aufweisen, in welche die Rasthaken 14 des Grundkörpers 10 eingefügt werden können, um die Zwischenplatte 50 zu befestigen. Die Zwischenplatte 50 weist ferner z. B. an ihrem ersten Ende 51 zwei Ausnehmungen 53 auf. Ferner kann die Zwischenplatte 50 Rasthaken 55 aufweisen, welche in Rasteinheiten 23 in der Deckplatte 20 eingefügt werden können.

Die Deckplatte 20 weist zwei Ausnehmungen 22 auf, welche mit den Ausnehmungen 13 des Grundkörpers oder mit den Ausnehmungen 53 der Zwischenplatte zusammenwirken können, so dass eine sich darin befindliche Hydraulikleitung komplett umgeben wird.

Gemäß einem Aspekt der vorliegenden Erfindung sind die Ausnehmungen 13 sowie optional die Ausnehmungen 53 außermittig vorgesehen. Mit anderen Worten, die Ausnehmungen 13 bzw. 53 umgeben eine sich darin befindliche Hydraulikleitung um mehr als 180°. Dies ist vorteilhaft, weil damit eine Überkopfmontage vereinfacht wird, da die Leitungen in den Ausnehmungen 13, 53 gehalten werden.

Fig. 2 zeigt eine perspektivische Ansicht einer Schelleneinheit gemäß der Erfindung. In Fig. 2 ist die Schelleneinheit im zusammengebauten Zustand und ohne Inlays 30 gezeigt. Der Grundkörper 10 ist damit beispielsweise mittels einer Aufbauschraube 40 an einer Wand oder einer Decke montiert. Die Zwischenplatte 50 ist auf der Grundplatte mittels der Rasthaken 14 und der Rasteinheit 56 montiert. Die Deckplatte 20 ist auf der Zwischenplatte mittels der Rasthaken 55 und den Rasteinheiten 23 montiert.

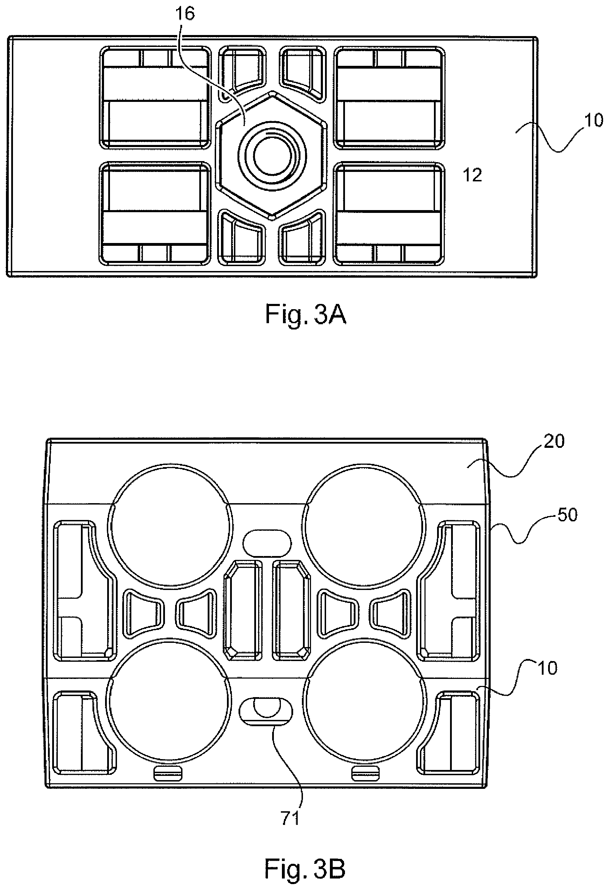

Fig. 3A bis 3D zeigen jeweils verschiedene Ansichten einer Schelleneinheit gemäß der Erfindung. In den Fig. 3A bis 3D sind verschiedene Ansichten der Schelleneinheit gezeigt. In Fig. 3A ist die Unteransicht mit der zweiten Seite 12 des Grundkörpers 10 dargestellt. Fig. 3B zeigt eine Seitenansicht des Schellenkörpers mit dem Grundkörper 10, der Zwischenplatte 50 und der Deckplatte 20.

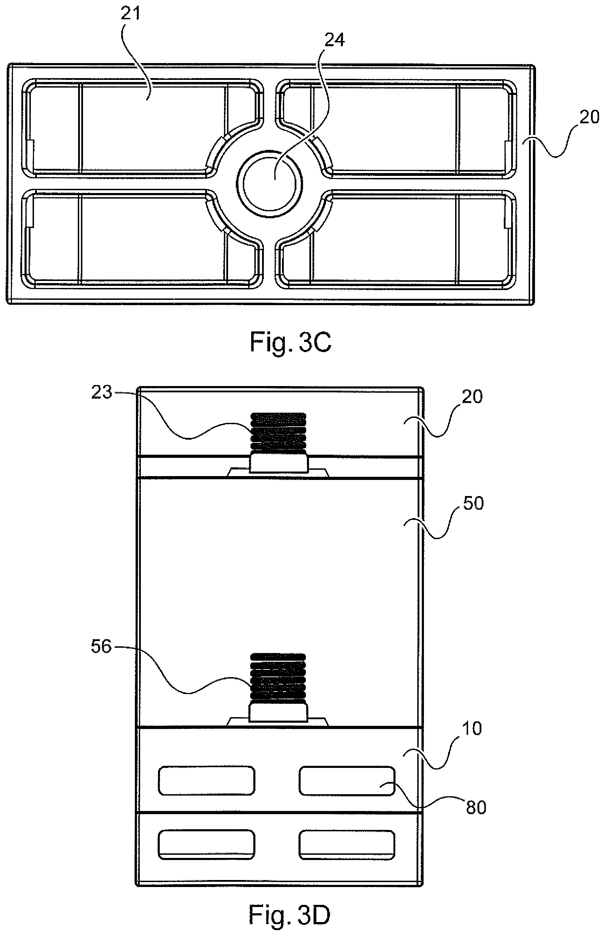

Fig. 3C zeigt ein oberes Ende 21 der Deckplatte 20 zusammen mit einer Öffnung 24. Fig. 3D zeigt eine Seitenansicht der Schelleneinheit.

Mit der erfindungsgemäßen Schelleneinheit kann eine leichte und effiziente Montage von Hydraulikleitungen beispielsweise in Form von Röhren oder Schlauchleitungen erfolgen. Auf Grund der Außermittigkeit der Ausnehmungen 13 und 53 kann eine Überkopfmontage erheblich vereinfacht werden. Unter Verwendung der Inlays 30 können verschiedene Hydraulikleitungen mit unterschiedlichen Außendurchmessern mittels der Schelleneinheit montiert werden.

Gemäß einem Aspekt der vorliegenden Erfindung ist die Schelleneinheit für Schellengrößen BD1 bis BD6 geeignet. Der Außendurchmesser kann zwischen 6 und 42 mm betragen. Die Schlaufennennweite kann DN06 bis DN50 betragen.

Durch die Außermittigkeit der Ausnehmungen 13 und 53 für die Hydraulikleitungen kann ein Vorklemmen der Hydraulikleitungen erreicht werden.

Gemäß der Erfindung kann die Schelleneinheit modular aufgebaut werden. Insbesondere kann dabei auf die Zwischenplatte 50 verzichtet werden. Alternativ dazu können mehrere Zwischenplatten 50 aufeinander montiert werden, um eine Mehrzahl von Hydraulikrohren montieren zu können.

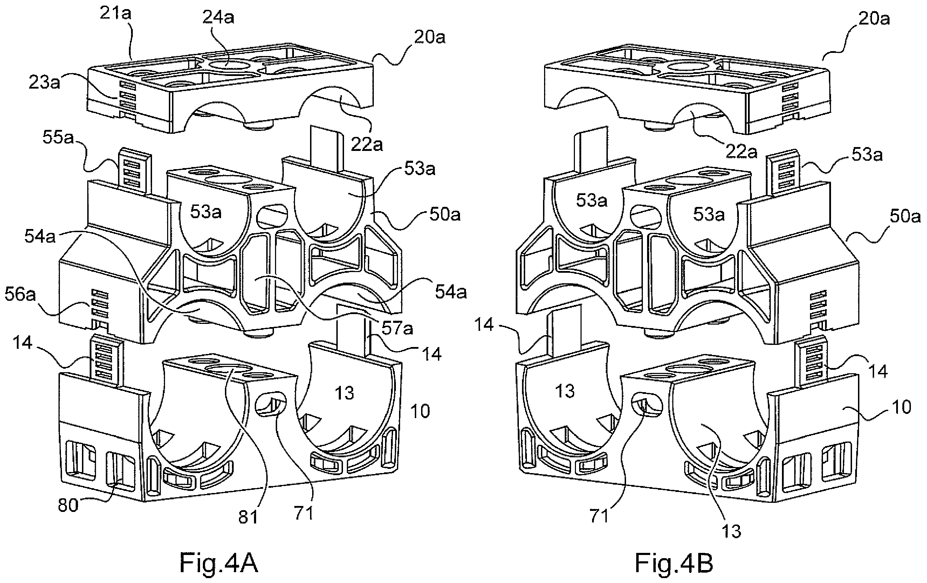

Fig. 4A und 4B zeigen jeweils eine perspektivische Ansicht einer Schelleneinheit gemäß einem zweiten Ausführungsbeispiel der Erfindung. Die Schelleneinheit weist einen Grundkörper 10, eine Zwischenplatte 50a sowie eine Deckplatte 20a auf. Der Grundkörper 10 entspricht im Wesentlichen dem Grundkörper 10 gemäß dem ersten Ausführungsbeispiel. Der Grundkörper 10 weist daher beispielsweise zwei Ausnehmungen 13 zur teilweisen Aufnahme von Hydraulikleitungen auf. Ferner weist der Grundkörper 10 ein erstes Ende 11 und ein zweites Ende 12 auf. Am ersten Ende 11 sind zwei Rasthaken 14 vorgesehen. Optional können Schlitze 16 im Bereich der Ausnehmungen 13 vorgesehen sein. Ferner können optional Inlays in die Ausnehmungen 13 platziert werden.

Die Zwischenplatte 50a unterscheidet sich von der Zwischenplatte 50 gemäß dem ersten Ausführungsbeispiel durch ihr oberes Ende. Das untere Ende der Zwischenplatte 50a mit den Ausnehmungen 45a entspricht der Ausgestaltung der Zwischenplatte 50 mit den Ausnehmungen 45 gemäß dem ersten Ausführungsbeispiel. Die Zwischenplatte 50a dient somit dazu unterschiedliche Baugrößen der Zwischenplatten 50 und der Deckplatten 20a miteinander zu kombinieren. Dazu ist die Breite des oberen Abschnitts der Zwischenplatte 50a kleiner als die Breite des unteren Abschnitts.

Die Deckplatte 20a entspricht im Wesentlichen in ihrem Aufbau der Deckplatte 20 gemäß dem ersten Ausführungsbeispiel, wobei lediglich die Breite der Deckplatte 20a geringer ist als die Breite der Deckplatte 20 gemäß dem ersten Ausführungsbeispiel. Die Ausnehmungen 22a der Deckplatte 20a sind an die Ausnehmungen 53a der Zwischenplatte 50 angepasst. Gemäß dem zweiten Ausführungsbeispiel kann die Deckplatte 20a somit nicht unmittelbar auf dem Grundkörper 10 platziert werden, da der Grundkörper 10 breiter ist als die Deckplatte 20a. Die Schelleneinheit kann optional zur Montage auf Anschweißplatten oder Tragschienen (Tragschienenmutter) nach DIN 3015 genutzt werden.

Zur Erhöhung der Klemmkraft kann optional eine Durchgangsschraube (Handelsübliche Sechskantschraube) oder die Aufbauschraube 40 derart verschraubt werden, so dass sie die Zwischenplatte 50 und die Deckplatte 20 zusammen mit dem Grundkörper 10 verbindet.

Bei Bedarf kann eine Deckplatte 20 nach DIN 3015 zur Erhöhung der Klemmkraft genutzt werden.

Die Schelleneinheit kann mittels einer Durchgangschraube von unten durch den Grundkörper 10 und durch eine Blechwand befestigt werden. Diese Schelleneinheit kann dann mit einem zusätzlichem O-Ring 81 gegen herausfallen gesichert werden.

Die Schraube 40 kann mit zusätzlichem Werkzeug zu Demontage der Aufbauschraube in dem Grundkörper 10 und insbesondere mittels der Bohrung 70, 71 in der Schraube 40 und der Bohrung in dem Grundkörper 10 fixiert werden.

Ferner kann die Schelleneinheit zum Bündeln von Hydraulikleitungen ohne eine Wandmontage, d.h. ohne die Schraube 40 verwendet werden.

In dem Grundkörper 10 können jeweils Bohrungen/Aussparrungen 80 vorgesehen werden mit denen zusätzliche Kabelbänder an die Schelleneinheit befestigt werden, um z.B. elektrische Leitungen zu fixieren.

## Patentansprüche

1. Schelleneinheit für Hydraulikleitungen, mit
einem Grundkörper (10), welcher an einer Wand oder einer Decke befestigbar ist und mindestens eine Grundkörper-Ausnehmung (13) zur Aufnahme einer Hydraulikleitung aufweist, und
einer Deckplatte (20), welche mindestens eine Deckplatten-Ausnehmung (22) zur zumindest teilweisen Aufnahme einer Hydraulikleitung aufweist,
wobei die mindestens eine Grundkörper-Ausnehmung (13) außermittig ausgestaltet ist, und
wobei die Deckplatten-Ausnehmung (22) an die Grundkörper-Ausnehmung (13) angepasst ist, so dass die Grundkörper-Ausnehmung (13) und die Deckplatten-Ausnehmung (22) zusammen eine Hydraulikleitung zumindest teilweise umgeben können.

2. Schelleneinheit nach Anspruch 1,
wobei der Grundkörper (10) mindestens zwei Rasthaken (14) aufweist, mittels welchen die Deckplatte (20) an dem Grundkörper (10) lösbar befestigbar ist.

3. Schelleneinheit nach Anspruch 2, ferner mit
einer Zwischenplatte (50), welche an ihrer ersten Seite mindestens eine erste Zwischenplatten-Ausnehmung (53) und an ihrer zweiten Seite mindestens eine zweite Zwischenplatten-Ausnehmung (54) jeweils zur mindestens teilweisen Aufnahme einer Hydraulikleitung aufweist,
wobei die Zwischenplatte (50) zwei Rasthaken (55) aufweist, mittels welcher die Deckplatte (20) an der Zwischenplatte (50) lösbar befestigbar ist,
wobei die Zwischenplatte (50) an dem Grundkörper (10) mittels der Rasthaken (14) des Grundkörpers (10) lösbar befestigbar ist.

4. Schelleneinheit nach einem der Ansprüche 1 bis 3, ferner mit
mindestens einem Inlay (30), welches in der Grundkörper-Ausnehmung (13) platzierbar ist, um Hydraulikleitungen mit unterschiedlichem Außendurchmesser und/oder Materialien aufnehmen zu können.

5. Schelleneinheit nach Anspruch 4, wobei
mindestens ein Schlitz (16) in der mindestens einen Grundkörper-Ausnehmung (13) vorgesehen ist und dazu ausgestaltet ist, Füße (33) der Inlays (30) aufzunehmen, so dass das Inlay fest in der Grundkörper-Ausnehmung (13) montierbar ist.

6. Schelieneinheit nach einem der Ansprüche 1 bis 5, ferner mit
einer Durchgangsschraube oder Aufbauschraube (40) zum Verbinden der Zwischenplatte (50), der Deckplatte (20) und dem Grundkörper (10).

7. Schelleneinheit nach einem der Ansprüche 1 bis 6, wobei
die Durchgangsschraube oder die Aufbauschraube (40) eine Bohrung (70) aufweist, mittels welcher die Schraube montiert oder demontiert werden kann.

8. Schelleneinheit nach einem der Ansprüche 1 bis 7, wobei
der Grundkörper (10) mindestens eine Ausnehmung (80) zur Aufnahme von Kabelbändern aufweist.
